# EUROPEAN PATENT APPLICATION

(11) **EP 4 790 751 A1**
(43) Date of publication of application: **12.08.2026**
(21) Application number: 25808433.4
(22) Date of filing: 16.05.2025
(51) Int. Cl.: H01M 4/04, F26B 25/22, F26B 21/00, F26B 21/08, F26B 13/10

(54) **ELECTRODE MANUFACTURING DEVICE AND ELECTRODE MANUFACTURING METHOD**

(30) Priority: 22.05.2024 KR 20240066354
(71) Applicant: LG Energy Solution, Ltd., Seoul 07335 (KR)
(72) Inventor: KIM, Yeon Chan, Daejeon 34122 (KR); YANG, Hee Kwang, Daejeon 34122 (KR); JANG, Eun Bin, Daejeon 34122 (KR); KO, Myung Jun, Daejeon 34122 (KR)
(74) Representative: Plasseraud IP
(86) International application number: PCT/KR2025/095321
(87) International publication number: WO 2025/244494

(57) **Abstract**

The present invention relates to an electrode manufacturing device and an electrode manufacturing method, which provides an electrode manufacturing device and an electrode manufacturing method, capable of effectively preventing over-drying by adjusting a speed of a fan in a drying part to a lower rotation speed than the rotation speed before a shutdown based on the internal humidity of the drying part, upon restart of a coating part after the shutdown.

## Description

### Technical Field

The present invention relates to an electrode manufacturing device and an electrode manufacturing method.

This application claims the benefit of priority from Korean Patent Application No. 10-2024-0066354 dated May 22, 2024, the entire disclosure of which is incorporated herein by reference.

### Background Art

Lithium secondary batteries are provided with electrodes comprising active materials which exhibit electrical activity, where such electrodes are manufactured by coating an electrode slurry containing an active material on an electrode sheet to form a composite layer, and drying the same. For such an electrode manufacturing process, usually, a coating device for coating an electrode slurry on an electrode sheet transferred in one direction upon electrode manufacturing, and a drying device for drying the electrode sheet coated with the electrode slurry to volatilize (or remove) a solvent within the electrode slurry have been used.

Typically, as the drying device, a drying oven mounted with a fan supplying hot air has been mainly used. In the case of the drying oven, a supplied amount of hot air could be controlled by adjusting a fan rotation speed, and a final product having a desired dry rate could be obtained, as the amount of solvent volatilized in the slurry is determined depending on the supplied amount of hot air.

Even if the drying devices have the same supplied amount of hot air, the dry rate of the final product can vary depending on the internal humidity of the drying device. Accordingly, in the case of existing drying devices, under a situation where coating and drying processes were performed normally, drying conditions (e.g., fan rotation speed) were established in a section where the internal humidity of the drying device converged to a constant level.

Meanwhile, due to various unavoidable circumstances, the coating device often had to be shut down for a certain period. Because the slurry coating does not occur during the downtime of the coating device, the longer the downtime, a volatilization volume of the solvent inside the drying device decreases, and accordingly, the internal humidity of the drying device during the shutdown is relatively lower than the internal humidity of the drying device before the shutdown of the coating process.

In this way, when the coating device was restarted in a situation where the internal humidity of the drying device was relatively low, there was a problem that if the drying conditions of the drying device established in the situation where the internal humidity was relatively high were applied, over-drying of the electrode occurred.

### Disclosure

### Technical Problem

It is a problem to be solved by the present invention to provide an electrode manufacturing device and an electrode manufacturing method, capable of effectively preventing over-drying upon restart of a coating part after a shutdown.

In addition, it is a problem to be solved by the present invention to provide an electrode manufacturing device and an electrode manufacturing method, capable of preventing over-drying by adjusting a speed of a fan in a drying part to a lower rotation speed than a rotation speed before a shutdown based on measured internal humidity of a drying part, upon restart of a coating part after a shutdown.

### Technical Solution

To solve the problems, according to one example of the present invention, an electrode manufacturing method is provided, which comprises: a coating step of coating an electrode slurry on an electrode sheet transferred in one direction from a coating part; a drying step of operating a fan supplying hot air in a drying part at a preset first rotation speed and drying the electrode slurry coated on the electrode sheet through the hot air; and a control step of controlling operation of the coating part and the drying part, and controlling the rotation speed of the fan in the drying part to a second rotation speed lower than the first rotation speed based on measured internal humidity of the drying part upon restart of the coating part after a shutdown.

Also, in the electrode manufacturing method, upon restart of the coating part after the shutdown, when the measured internal humidity of the drying part is second internal humidity lower than first internal humidity before the shutdown or third internal humidity lower than the second internal humidity, the control step may control the rotation speed of the fan in the drying part to the second rotation speed at the second internal humidity, and may control it to a third rotation speed lower than the second rotation speed at the third internal humidity.

In addition, in the electrode manufacturing method, the drying part may comprise a plurality of drying chambers through which the electrode sheet sequentially passes, and the control step may control the rotation speed of the fan in each drying chamber to the same rotation speed.

Furthermore, in the electrode manufacturing method, the drying part may further comprise a heater, and the control step may control operating conditions of the heater before the shutdown of the coating part and operating conditions of the heater upon restarting to be identical.

Also, in the electrode manufacturing method, it may comprise a setting step of dividing the internal humidity of the drying part into multiple sections and setting an optimal rotation speed for each section.

In addition, in the electrode manufacturing method, it may comprise a measuring step of measuring the internal humidity of the drying part upon restart of the coating part after the shutdown, and the control step may search for a section corresponding to the measured internal humidity of the drying part and control the rotation speed of the fan in the drying part to the set rotation speed of the searched section.

Furthermore, in the electrode manufacturing method, it may comprise a collection step of collecting information on a weight of the electrode sheet coated with the electrode slurry before drying, a weight of the electrode sheet coated with the electrode slurry after drying, and a solid content of the electrode slurry coated on the electrode sheet before drying; and an evaluation step of evaluating appropriateness of the first rotation speed based on the collected information.

Also, in the electrode manufacturing method, the evaluation step may evaluate the first rotation speed as appropriate when a dry rate of the electrode, calculated according to Equations 1 and 2 below, is within a range of 80 to 99%:
$Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$

$Ac \left(Adjust coefficient\right) = \frac{\left(M1*-M1*\times M3\right)}{M 1 * - M 2 *}$

In Equations 1 and 2 above, M1 is the weight of the electrode sheet coated with the electrode slurry before drying, M1* is the average weight of the electrode sheets coated with the electrode slurry before drying, M2 is the weight of the electrode sheet coated with the electrode slurry after drying, M2* is the weight of the electrode sheet coated with the over-dried electrode slurry after drying, and M3 is the solid content of the electrode slurry coated on the electrode sheet before drying.

According to another example of the present invention, an electrode manufacturing device is provided, which comprises: a coating part for coating an electrode slurry on an electrode sheet transferred in one direction; a drying part for operating a fan supplying hot air at a preset first rotation speed and drying the electrode slurry coated on the electrode sheet through the hot air; and a control part for controlling operation of the coating part and the drying part, and controlling the rotation speed of the fan in the drying part to a second rotation speed lower than the first rotation speed based on measured internal humidity of the drying part upon restart of the coating part after a shutdown.

Also, in the electrode manufacturing device, upon restart of the coating part after the shutdown, when the measured internal humidity of the drying part is second internal humidity lower than first internal humidity before the shutdown or third internal humidity lower than the second internal humidity, the control part may control the rotation speed of the fan in the drying part to the second rotation speed at the second internal humidity, and may control the rotation speed of the fan in the drying part to a third rotation speed lower than the second rotation speed at the third internal humidity.

In addition, in the electrode manufacturing device, the drying part may comprise a plurality of drying chambers through which the electrode sheet sequentially passes, and the control part may control the rotation speed of the fan in each drying chamber to the same rotation speed.

Furthermore, in the electrode manufacturing device, the drying part may further comprise a heater, and the control part may control operating conditions of the heater before the shutdown of the coating part and operating conditions of the heater upon restarting to be identical.

Also, in the electrode manufacturing device, it may comprise a setting part dividing the internal humidity of the drying part into multiple sections and setting an optimal rotation speed for each section.

In addition, in the electrode manufacturing device, it may comprise a measuring part measuring the internal humidity of the drying part upon restart of the coating part after the shutdown, and the control part may search for a section corresponding to the measured internal humidity of the drying part and control the rotation speed of the fan in the drying part to the set rotation speed of the searched section.

Furthermore, in the electrode manufacturing device, it may comprise a collection part collecting information on a weight of the electrode sheet coated with the electrode slurry before drying, a weight of the electrode sheet coated with the electrode slurry after drying, and a solid content of the electrode slurry coated on the electrode sheet before drying; and an evaluation part evaluating appropriateness of the first rotation speed based on the collected information.

Also, in the electrode manufacturing device, the evaluation part may evaluate the first rotation speed as appropriate when a dry rate of the electrode, calculated according to Equations 1 and 2 below, is within a range of 80 to 99%:

$Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$

$Ac \left(Adjust coefficient\right) = \frac{\left(M1*-M1*\times M3\right)}{M 1 * - M 2 *}$

In Equations 1 and 2, M1 is the weight of the electrode sheet coated with the electrode slurry before drying, M1* is the average weight of the electrode sheets coated with the electrode slurry before drying, M2 is the weight of the electrode sheet coated with the electrode slurry after drying, M2* is the weight of the electrode sheet coated with the over-dried electrode slurry after drying, and M3 is the solid content of the electrode slurry coated on the electrode sheet before drying.

### Advantageous Effects

As discussed above, the electrode manufacturing device and electrode manufacturing method related to one example of the present invention have the following effects.

Upon restart of the coating part after the shutdown, by adjusting the speed of the fan in the drying part to a lower rotation speed than the rotation speed before the shutdown based on the measured internal humidity of the drying part, it is possible to effectively prevent over-drying.

### Description of Drawings

Figure 1 is a block diagram of an electrode manufacturing device according to one example of the present invention.
Figure 2 is a detailed diagram of an electrode manufacturing device according to one example of the present invention.
Figures 3 to 6 are diagrams for explaining shutdown and restart states of a coating part and a drying part in an electrode manufacturing device according to one example of the present invention.

### Mode for Invention

Hereinafter, an electrode manufacturing device and an electrode manufacturing method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

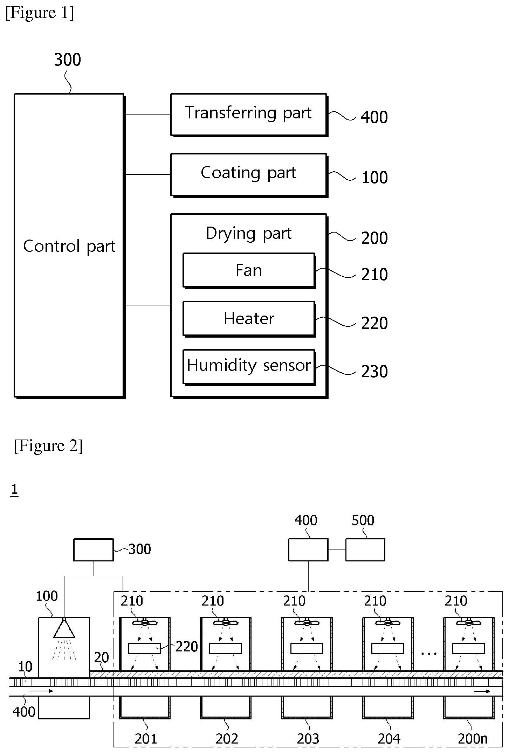

Figure 1 is a block diagram of an electrode manufacturing device according to one example of the present invention, and Figure 2 is a detailed diagram of an electrode manufacturing device according to one example of the present invention.

Referring to Figures 1 and 2, the electrode manufacturing device (1) comprises a coating part (100), a drying part (200), and a control part (300).

The coating part (100) is arranged to coat an electrode slurry (20) on an electrode sheet (10) during transfer. Specifically, the coating part (100) coats an electrode slurry (20) on an electrode sheet (10) transferred in one direction. In addition, the coating part (100) may comprise one or more coaters (e.g., slot die coaters), and may be arranged to coat (or apply) an electrode slurry (20) on one or both sides of an electrode sheet (10).

The electrode sheet (10) may be a negative electrode or positive electrode sheet. The electrode slurry (20) may comprise an electrode active material and a solvent, and may further comprise additives such as a conductive material or a binder. As one example, when the electrode sheet (10) is a negative electrode sheet, the electrode slurry (20) may comprise a negative electrode active material, and when the electrode sheet (10) is a positive electrode sheet, the electrode slurry (20) may comprise a positive electrode active material. The detailed composition of the active material is not particularly limited, and various known compositions may be used without limitation.

The electrode manufacturing device according to the present invention may comprise a transferring part (400) transferring the electrode sheet (10) in one direction. The transferring part (400) is not particularly limited, if it is any device capable of transferring electrode sheets, and a conveyor belt, transfer rollers, and the like may be used. As one example, the transferring part (400) may be arranged to transfer electrode sheets in a roll-to-roll manner through a plurality of transfer rollers. The electrode sheets (10) may have a predetermined length, and may be sequentially transferred to the drying part (200) via the coating part (100) in a state where they are seated on the transferring part (400).

The drying part (200) is arranged to dry the electrode slurry (20) coated on the electrode sheet (10). The drying part (200) may comprise a fan (210) capable of adjusting the rotation speed (rpm) and a humidity sensor (230). The drying part (200) operates the fan (210) supplying hot air at a preset first rotation speed, thereby drying the electrode slurry (20) coated on the electrode sheet (10) through the hot air. The drying degree of the electrode may be determined based on the rotation speed of the fan (210). As the rotation speed of the fan (210) increases, the dry rate of the electrode can increase.

Here, the term "preset first rotation speed" may be a rotation speed for satisfying a desired dry rate when the internal humidity of the drying part (200) converges to a constant value or a constant range in a state (hereinafter, also referred to as a 'normal operating state') where the coating part (100) continuously operates for a predetermined period without stop movement. That is, by setting the fan rotation speed to the first rotation speed, drying conditions within the drying device can be established in the normal operating state.

For example, the first rotation speed may be determined in consideration of the desired dry rate of the final product in a section where the internal humidity of the drying part (200) converges (or is maintained) to a constant value.

More specifically, when the rotation speed for achieving a target dry rate of 80% in a section where the internal humidity of the drying part (200) converges to a constant value is A (rpm), the rotation speed for achieving a target dry rate of 80% or more may be set higher than A (rpm), and the rotation speed for achieving a target dry rate of 80% or less may be set lower than A (rpm).

When the fan (210) operates at the first rotation speed in a state where the coating part (100) and the drying part (200) operate normally, a final product (completely dried electrode sheet) having a desired dry rate may be obtained.

Meanwhile, upon restart of the coating part (100) after a shutdown, the internal humidity of the drying part (200) may vary depending on the humidity of the hot air or the coating amount (or coating length) of the electrode sheet before the shutdown. The hot air is heated external air, where the humidity of the hot air may vary depending on the humidity of the external air.

In addition, the coating length represents the length where the electrode slurry (20) is coated on the electrode sheet (10) along the transfer direction. The coating length is relevant to the solvent volatilization volume of the electrode slurry (20), and the longer the coating length formed by the coating before the shutdown, the greater the amount of electrode slurry (20), so that the solvent volatilization volume may increase as well, and if the volatilization volume increases, the internal humidity of the drying part (200) may increase relatively.

For example, even if the coating part (100) is stopped, the transfer of the electrode sheet (10) by the transferring part (400) may be maintained. Accordingly, during the shutdown of the coating part (100), the electrode sheet (10) no longer coated with the electrode slurry (20) may be transferred to the drying part (200).

As the electrode sheet (10) moves to the drying part (200) while the electrode sheet (10) remains uncoated during the downtime of the coating part (100), the solvent volatilization volume in the drying part (200) no longer increases, whereby the internal humidity of the drying part (200) tend to gradually decrease.

However, the degree to which the internal humidity of the drying part (200) decreases may vary depending on the coating amount immediately before the shutdown of the coating part (100), and for example, the greater the coating amount immediately before the shutdown of the coating part (100), the less the internal humidity of the drying part (200) may relatively decrease during the shutdown of the coating part (100), and the less the coating amount immediately before the shutdown of the coating part (100), the more rapidly the internal humidity of the drying part (200) decreases during the shutdown of the coating part (100). This is because the greater the coating amount, the greater the solvent volatilization volume.

The changes in internal humidity of the drying part (200) according to the coating amount (or coating length) of the electrode slurry (20) will be described in detail through the drawings.

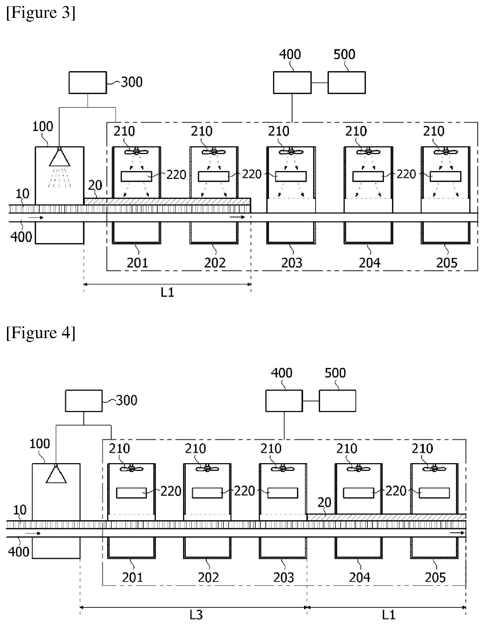

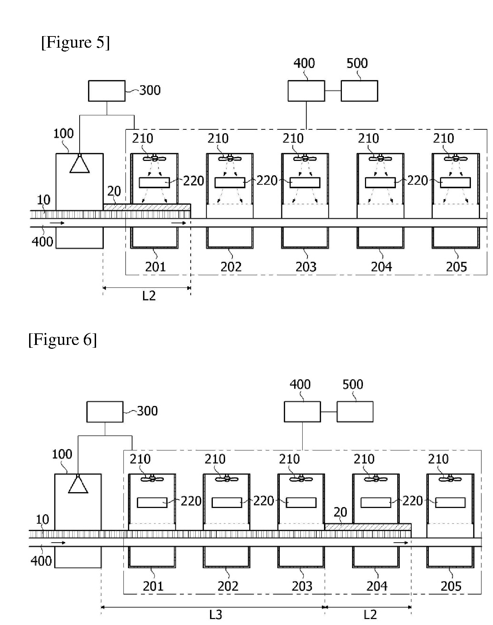

Figures 3 and 6 are diagrams for explaining shutdown and restart states of a coating part and a drying part of an electrode manufacturing device according to one example of the present invention.

Figures 3 to 6 each show states that the downtimes are the same in a state where the coating lengths are different from each other, and the restart state is performed, and have exemplarily illustrated a drying part (200) having five drying chambers (201, 202, 203, 204, and 205).

Figure 3 is a diagram showing a state where the coating length (length along the transfer direction of the electrode sheet) has advanced by L1 before the shutdown of the coating part (100), and Figure 4 is a diagram showing a state where the electrode sheet passes through the drying part (200) using the transferring part, in a state where the coating part (100) is stopped for a predetermined time in the state illustrated in Figure 3.

In addition, Figure 5 is a diagram showing a state where the coating length has advanced by L2 before the shutdown of the coating part (100), and Figure 6 is a diagram showing a state where the electrode sheet passes through the drying part (200) using the transferring part in a stopped state for a predetermined period in the state illustrated in Figure 5.

The downtimes of the coating parts in Figures 3 to 6 are the same, and the coating length L1 shown in Figure 3 has been shown to be longer than the coating length L2 shown in Figure 5. Furthermore, the longer the coating length on the electrode sheet (10) before the shutdown of the coating part (100), the greater the coating amount may be, and the greater the coating amount, the greater the volatilization volume of the solvent in the slurry within the drying part (200) may be.

Referring to Figures 4 and 6, the electrode sheet (10) may continuously move in a state where the electrode slurry (20) is uncoated during the downtime of the coating part (100). During the downtime of the coating part (100), the length of the electrode sheet (10), in which the electrode slurry (20) is uncoated, moving to the drying part (200) may be as long as L3. As the downtime of the coating part (100) increases, the length of the electrode sheet (10), in which the electrode slurry (20) is uncoated, moving to the drying part (200) may increase.

Since the downtimes of the coating parts (100) illustrated in Figures 3 to 6 are the same, the length of the electrode sheet (10), in which the electrode slurry (20) is uncoated, has been equally represented as L3 in Figures 3 to 6.

Referring to Figures 3 to 6, even if the electrode manufacturing devices have the same downtime, the coating lengths by the coating parts (100) immediately before the shutdowns of the coating parts (100) may differ. When the coating lengths by the coating parts (100) are different from each other, the internal humidity of the drying part (200) may vary even if the downtimes of the coating parts (100) are the same. For example, the internal humidity of the drying part (200) illustrated in Figure 4, which has a relatively long coating length, may be higher than the internal humidity of the drying part (200) illustrated in Figure 6.

As described above, since the coating length can affect the internal humidity of the drying part (200), it is preferable to consider the coating length before the shutdown together, to prevent electrode over-drying.

The control part (300) is arranged to control operation of the coating part (100) and the drying part (200). Upon restart of the coating part (100) after the shutdown, the control part (300) controls the rotation speed of the fan (210) in the drying part (200) to the second rotation speed lower than the first rotation speed based on the internal humidity of the drying part (200) measured by a humidity sensor. In the present invention, the internal humidity may be absolute humidity (g/m³). In addition, the control part (300) may further control operation of the transferring part (400). If the downtime of the coating part (100) continues for a predetermined period or more, the control part (300) may stop the operation of the transferring part (400).

As mentioned above, the first rotation speed is established in a section where the internal humidity of the drying part (200) converges constantly under a situation where the coating part (100) operates normally, so that if the first rotation speed is maintained as such in a state where the internal humidity of the drying part (200) is relatively lowered, as the coating part (100) is stopped and then restarted, the over-drying of the electrode may occur.

The present invention adjusts the speed of the fan (210) of the drying part (200) to the second rotation speed lower than the first rotation speed based on the internal humidity of the drying part (200) at the time point when the coating part (100) is restarted, so that there is an advantage capable of preventing over-drying of the electrode regardless of the humidity of the hot air or the coating amount.

In one example, upon restart of the coating part (100) after the shutdown, when the measured internal humidity of the drying part (200) is the second internal humidity lower than the first internal humidity before the shutdown or the third internal humidity lower than the second internal humidity, the control part (300) may control the rotation speed of the fan (210) in the drying part (200) to the second rotation speed at the second internal humidity, and may control the rotation speed of the fan in the drying part (200) to the third rotation speed lower than the second rotation speed at the third internal humidity. As described above, upon restart of the coating part (100) after the shutdown, the control part (300) can prevent over-drying of the electrode by lowering the rotation speed of the fan as the internal humidity of the drying part (200) decreases.

In one specific example, the drying part (200) may comprise a plurality of drying chambers (201, 202, 203, 204, 200n) through which the electrode sheet passes sequentially, and the control part (300) may control the rotation speed of the fan (210) in each drying chamber to the same rotation speed. For example, the number of the plurality of drying chambers (201, 202, 203, 204, 200n) may be 10 or more, but is not limited thereto. The plurality of drying chambers (201, 202, 203, 204, 200n) may be disposed to be spaced apart from each other along the transfer direction of the electrode sheet (10). For example, the electrode sheet (10) coated with the electrode slurry (20) may begin drying while it passes through the first drying chamber (201), and achieve the final target dry rate when it passes through the last drying chamber (200n).

In another example, the drying part (200) may further comprise a heater (220) for heating the electrode sheet (10). As one example, each drying chamber may comprise a fan and a heater. The control part (300) may control operating conditions of the heater (220) before the shutdown of the coating part (100) and operating conditions of the heater (220) upon restart to be identical. As one example, the control part (300) may control the operating conditions of the heaters in each drying chamber to be identical. The drying part (200) may adjust the dry rate of the electrode sheet (10) by adjusting the rotation speed of the fan (210) or the temperature (or output) of the heater (200), but adjustment of the rotation speed of the fan (210) can be reflected relatively quickly in the dry rate of the electrode compared to adjustment of the temperature of the heater (220).

The electrode manufacturing device according to the present invention can exhibit high responsiveness to the electrode dry rate by adjusting only the rotation speed of the fan (210) differently while maintaining the same operating conditions of the heater (220) before and after the shutdown of the coating part (100).

In one example, it may comprise a setting part dividing the internal humidity measured in the drying part (200) into multiple sections and setting an optimal rotation speed for each section.

The optimal rotation speed set by the setting part may be a rotation speed capable of production of a final product satisfying the target dry rate without causing over-drying of the electrode.

For example, the setting part may divide it into a first section where the internal humidity of the drying part (200) is 7.5g/m³ or less, a second section where the internal humidity of the drying part (200) is 7.5 to 15g/m³, and a third section where the internal humidity of the drying part (200) is 15g/m³ or more, and set optimal rotation speeds in the first to third sections. Since the internal humidity increases as it moves toward the first section, the second section, and the third section, the rotation speed to be set may increase as it moves toward the first section, the second section, and the third section.

In one specific example, the drying part (200) may comprise a measuring part measuring the internal humidity of the drying part (200) upon restart of the coating part (100) after the shutdown, and the control part (300) may search for a section corresponding to the measured internal humidity of the drying part (200) and control the rotation speed of the fan (210) in the drying part (200) to the set rotation speed of the searched section. The measuring part may be a humidity sensor. For example, when the measured internal humidity of the drying part (200) upon restart of the coating part (100) after the shutdown is 10g/m³, the control part (300) may control the rotation speed of the fan (210) in the drying part (200) to the rotation speed set in the second section as described above.

In one example, the electrode manufacturing device according to the present invention may comprise a collection part (400) collecting information on a weight of an electrode sheet (10) coated with an electrode slurry (20) before drying, a weight of an electrode sheet (10) coated with an electrode slurry (20) after drying, and a solid content of an electrode slurry (20) coated on an electrode sheet (10) before drying, and an evaluation part (500) evaluating appropriateness of the first rotation speed based on the collected information. The weight may be measured using a web gauge.

Here, the electrode sheet (10) coated with an electrode slurry (20) after drying may be heavier the less dried it is, and lighter the more over-dried it is. This is because the less dried it is, the greater the amount of solvent remaining in the electrode slurry (20) without volatilization.

Specifically, the evaluation part (500) may evaluate the first rotation speed as appropriate when the dry rate of the electrode (E) calculated according to Equations 1 and 2 below is within the range of 80 to 99%. The dry rate may be, for example, 81 to 98%, 81 to 97%, 81 to 96%, 81 to 95%, 81 to 94%, 81 to 93%, 81 to 92%, 82 to 98%, 82 to 97%, 82 to 96%, 82 to 95%, 82 to 94%, 82 to 93%, or 82 to 92%. The dry rate may vary within the range depending on product specifications, and the matter of satisfying the dry rate at the first and second rotation speeds may mean that there are no problems with electrode drying, such as over-drying or under-drying by effectively reflecting the internal humidity of the drying part (200).$Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$$Ac \left(Adjust coefficient\right) = \frac{\left(M1*-M1*\times M3\right)}{M 1 * - M 2 *}$

In Equations 1 and 2 above, M1 is the weight of the electrode sheet (10) coated with the electrode slurry (20) before drying, M1* is the average weight of the electrode sheets (10) coated with the electrode slurry (20) before drying, M2 is the weight of the electrode sheet (10) coated with the electrode slurry (20) after drying, M2* is the weight of the electrode sheet (10) coated with the over-dried electrode slurry (20) after drying, and M3 is the solid content of the electrode slurry (20) coated on the electrode sheet (10) before drying. More specifically, the M1* may be calculated through an average value of multiple electrode sheets (10) coated with the electrode slurry (20) before drying.

Meanwhile, conventionally, the weight of the electrode sheet (10) coated with electrode slurry (20) after drying was measured using a web gauge, whereby the dry rate was evaluated as un-drying, normal-drying, or over-drying. For example, the existing method determined that the greater the weight of the electrode sheet (10) coated with the electrode slurry (20) after drying, the more the amount of the solvent, and thus evaluated it as un-drying. However, such an existing method had an error in that it was unclear whether the un-dried electrode was insufficiently dried or whether the electrode sheet (10) coated with electrode slurry (20) before drying was too heavy.

In contrast, the evaluation part (500) according to the present invention determines the dry rate by considering the weights before and after drying, and moreover the weight of the solid content, as described above, so that the error occurring in the existing measurement method can be prevented, whereby the evaluation can have excellent reliability.

The present invention also relates to an electrode manufacturing method. The method is an electrode manufacturing method using the above-described electrode manufacturing device. Therefore, detailed descriptions overlapping with the above-described contents will be omitted below.

Specifically, the electrode manufacturing method comprises a coating step of coating an electrode slurry (20) on an electrode sheet (10) transferred in one direction from a coating part (100), a drying step of operating a fan supplying hot air in a drying part (200) at a preset first rotation speed and drying the electrode slurry (20) coated on the electrode sheet (10) through the hot air, and a control step of controlling operation of the coating part (100) and the drying part (200), and controlling the rotation speed of the fan (210) in the drying part (200) to a second rotation speed lower than the first rotation speed based on measured internal humidity of the drying part (200) upon restart of the coating part (100) after a shutdown.

In one example, upon restart of the coating part (100) after the shutdown, when the measured internal humidity of the drying part (200) is second internal humidity lower than the first internal humidity before the shutdown or third internal humidity lower than the second internal humidity, the control step may control the rotation speed of the fan in the drying part to the second rotation speed at the second internal humidity, and to a third rotation speed lower than the second rotation speed at the third internal humidity.

In addition, the drying part (200) may comprise a plurality of drying chambers (201, 202, 203, 204, 200n) through which the electrode sheet passes sequentially, and the control step may control the rotation speed of the fan (210) in each drying chamber to the same rotation speed.

In another example, the drying part (200) may further comprise a heater (220), and the control step may control operating conditions of the heater (220) before the shutdown of the coating part (100) and operating conditions of the heater (220) upon restarting to be identical.

For example, it may comprise a setting step of dividing the internal humidity of the drying part (200) into multiple sections and setting an optimal rotation speed for each section.

Also, the electrode manufacturing method according to the present invention may comprise a measuring step of measuring the internal humidity of the drying part (200) upon restart of the coating part (100) after the shutdown, and the control step may search for a section corresponding to the measured internal humidity of the drying part (200) and control the rotation speed of the fan (210) in the drying part (200) to the set rotation speed of the searched section.

In addition, the electrode manufacturing method according to the present application may comprise a collection step of collecting information on a weight of the electrode sheet (10) coated with the electrode slurry (20) before drying, a weight of the electrode sheet (10) coated with the electrode slurry (20) after drying, and a solid content of the electrode slurry (20) coated on the electrode sheet (10) before drying, and an evaluation step of evaluating appropriateness of the first rotation speed based on the collected information.

In one specific example, the evaluation step may evaluate the first rotation speed as appropriate when a dry rate of the electrode, calculated according to Equations 1 and 2 below, is within a range of 80 to 99%.$Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$$Ac \left(Adjust coefficient\right) = \frac{\left(M1*-M1*\times M3\right)}{M 1 * - M 2 *}$

In Equations 1 and 2 above, M1 is the weight of the electrode sheet (10) coated with the electrode slurry (20) before drying, M1* is the average weight of the electrode sheets (10) coated with the electrode slurry (20) before drying, M2 is the weight of the electrode sheet (10) coated with the electrode slurry (20) after drying, M2* is the weight of the electrode sheet (10) coated with the over-dried electrode slurry (20) after drying, and M3 is the solid content of the electrode slurry (20) coated on the electrode sheet (10) before drying.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to an electrode manufacturing device and an electrode manufacturing method, related to one example of the present invention, it is possible to effectively prevent over-drying upon restart of the coating part after the shutdown.

## Claims

1. An electrode manufacturing method comprising: a coating step of coating an electrode slurry on an electrode sheet transferred in one direction from a coating part;
a drying step of operating a fan supplying hot air in a drying part at a preset first rotation speed and drying the electrode slurry coated on the electrode sheet through the hot air; and
a control step of controlling operation of the coating part and the drying part, and controlling the rotation speed of the fan in the drying part to a second rotation speed lower than the first rotation speed based on measured internal humidity of the drying part upon restart of the coating part after a shutdown.

2. The electrode manufacturing method according to claim 1, wherein upon restart of the coating part after the shutdown, when the measured internal humidity of the drying part is second internal humidity lower than first internal humidity before the shutdown or third internal humidity lower than the second internal humidity,
the control step controls the rotation speed of the fan in the drying part to the second rotation speed at the second internal humidity, and controls it to a third rotation speed lower than the second rotation speed at the third internal humidity.

3. The electrode manufacturing method according to claim 1, wherein the drying part comprises a plurality of drying chambers through which the electrode sheet sequentially passes, and
the control step controls the rotation speed of the fan in each drying chamber to the same rotation speed.

4. The electrode manufacturing method according to claim 1, wherein the drying part further comprises a heater, and
the control step controls operating conditions of the heater before the shutdown of the coating part and operating conditions of the heater upon restarting to be identical.

5. The electrode manufacturing method according to claim 1, further comprising: a setting step of dividing the internal humidity of the drying part into multiple sections and setting an optimal rotation speed for each section and
a measuring step of measuring the internal humidity of the drying part upon restart of the coating part after the shutdown, wherein
the control step searches for a section corresponding to the measured internal humidity of the drying part and controls the rotation speed of the fan in the drying part to the set rotation speed of the searched section.

6. The electrode manufacturing method according to claim 1, comprising: a collection step of collecting information on a weight of the electrode sheet coated with the electrode slurry before drying, a weight of the electrode sheet coated with the electrode slurry after drying, and a solid content of the electrode slurry coated on the electrode sheet before drying; and
an evaluation step of evaluating appropriateness of the first rotation speed based on the collected information.

7. The electrode manufacturing method according to claim 6, wherein the evaluation step evaluates the first rotation speed as appropriate when a dry rate of the electrode, calculated according to Equations 1 and 2 below, is within a range of 80 to 99%: $Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$ $Ac \left(Adjust coefficient\right) = \frac{\left(M1*-M1*\times M3\right)}{M 1 * - M 2 *}$ wherein, M1 is the weight of the electrode sheet coated with the electrode slurry before drying, M1* is the average weight of the electrode sheets coated with the electrode slurry before drying, M2 is the weight of the electrode sheet coated with the electrode slurry after drying, M2* is the weight of the electrode sheet coated with the over-dried electrode slurry after drying, and M3 is the solid content of the electrode slurry coated on the electrode sheet before drying.

8. An electrode manufacturing device comprising: a coating part for coating an electrode slurry on an electrode sheet transferred in one direction;
a drying part for operating a fan supplying hot air at a preset first rotation speed and drying the electrode slurry coated on the electrode sheet through the hot air; and
a control part for controlling operation of the coating part and the drying part, and controlling the rotation speed of the fan in the drying part to a second rotation speed lower than the first rotation speed based on measured internal humidity of the drying part upon restart of the coating part after a shutdown.

9. The electrode manufacturing device according to claim 8, wherein upon restart of the coating part after the shutdown, when the measured internal humidity of the drying part is second internal humidity lower than first internal humidity before the shutdown or third internal humidity lower than the second internal humidity,
the control part controls the rotation speed of the fan in the drying part to the second rotation speed at the second internal humidity, and controls the rotation speed of the fan in the drying part to a third rotation speed lower than the second rotation speed at the third internal humidity.

10. The electrode manufacturing device according to claim 8, wherein the drying part comprises a plurality of drying chambers through which the electrode sheet sequentially passes, and
the control part controls the rotation speed of the fan in each drying chamber to the same rotation speed.

11. The electrode manufacturing device according to claim 8, wherein the drying part further comprises a heater, and
the control part controls operating conditions of the heater before the shutdown of the coating part and operating conditions of the heater upon restarting to be identical.

12. The electrode manufacturing device according to claim 8, comprising a setting part dividing the internal humidity of the drying part into multiple sections and setting an optimal rotation speed for each section.

13. The electrode manufacturing device according to claim 12, comprising a measuring part measuring the internal humidity of the drying part upon restart of the coating part after the shutdown, wherein
the control part searches for a section corresponding to the measured internal humidity of the drying part and controls the rotation speed of the fan in the drying part to the set rotation speed of the searched section.

14. The electrode manufacturing device according to claim 8, comprising: a collection part collecting information on a weight of the electrode sheet coated with the electrode slurry before drying, a weight of the electrode sheet coated with the electrode slurry after drying, and a solid content of the electrode slurry coated on the electrode sheet before drying; and
an evaluation part evaluating appropriateness of the first rotation speed based on the collected information.

15. The electrode manufacturing device according to claim 14, wherein the evaluation part evaluates the first rotation speed as appropriate when a dry rate of the electrode, calculated according to Equations 1 and 2 below, is within a range of 80 to 99%: $Dry Rate = \frac{M 2 * \times \frac{M 1}{M 1 *}}{Ac \times \left(M2-M2*\times \frac{M 1}{M 1 *}\right) + M 2 * \times \frac{M 1}{M 1 *}}$ $Ac \left(Adjust coefficient\right) = \frac{\left(M1*-M1*\times M3\right)}{M 1 * - M 2 *}$ wherein, M1 is the weight of the electrode sheet coated with the electrode slurry before drying, M1* is the average weight of the electrode sheets coated with the electrode slurry before drying, M2 is the weight of the electrode sheet coated with the electrode slurry after drying, M2* is the weight of the electrode sheet coated with the over-dried electrode slurry after drying, and M3 is the solid content of the electrode slurry coated on the electrode sheet before drying.
